# FASCICULE DE BREVET EUROPEEN

(11) **EP 0 971 616 B1**
(45) Date de publication et mention de la délivrance du brevet: **27.03.2002**
(21) Numéro de dépôt: 99901681.9
(22) Date de dépôt: 02.02.1999
(51) Int. Cl.: A47J 27/04

(54) **DISPOSITIF POUR ASSURER LE RECHAUFFEMENT ET/OU LA CUISSON D'ALIMENTS**
VORRICHTUNG ZUM KOCHEN UND/ODER AUFWÄRMEN VON LEBENSMITTELN
DEVICE FOR HEATING AND/OR COOKING FOOD

(30) Priorité: 05.02.1998 FR 9801571
(43) Date de publication de la demande: 19.01.2000
(73) Titulaire: BEABA, 01100 Oyonnax (FR)
(72) Inventeur: DESSUISE, Patrice, F-01870 Martignat (FR)
(74) Mandataire: Vuillermoz, Bruno
(86) Numéro de dépôt international: FR9900206
(87) Numéro de publication internationale: WO9939618

(56) Documents cités:
- EP-A- 0 165 187
- FR-A- 2 586 922
- US-A- 1 740 205
- US-A- 4 010 736
- US-A- 4 574 776

## Description

L'invention concerne un dispositif destiné à permettre le réchauffement et/ou la cuisson d'aliments. Plus spécifiquement, l'invention se rapporte à un appareil de ce type en vu d'assurer la cuisson d'aliments pour enfants.

Il est bien connu aujourd'hui de procéder au sein d'un même dispositif, au mixage et au réchauffement soit concomitant soit consécutif du mélange alimentaire ainsi obtenu. On a par exemple décrit dans le document FR-A-2 586 922 un tel dispositif. Fondamentalement, celui-ci se compose d'un générateur de vapeur, assurant la production de vapeur, notamment par effet Joule, et d'un récipient, destiné à recevoir les aliments à mixer et réchauffer. Selon les enseignements de ce document, la vapeur est acheminée par le biais d'une canalisation au centre et au fond dudit récipient recevant les aliments à mixer et à réchauffer, au voisinage d'un couteau rotatif, assurant le mixage. De fait, par le double effet de l'acheminement de la vapeur au fond dudit récipient et la rotation du couteau mixeur, assurant une certaine homogénéisation de la température, on aboutit au résultat recherché. Pour autant, ce dispositif ne permet d'aboutir à ce résultat que lorsqu'un mixage est effectivement requis. Par ailleurs, le volume occupé par la canalisation centrale d'amené de la vapeur est relativement important, limitant de fait la capacité de dispositif en question.

L'objet de l'invention est de proposer un dispositif beaucoup plus simple, exempt de toute canalisation d'amené de la vapeur, permettant un réchauffement homogène des aliments même en l'absence de phase de mixage, et simplifiant en outre la phase ultérieure de lavage et de nettoyage dudit récipient.

Selon l'invention, le dispositif pour assurer le réchauffement et/ou la cuisson d'aliments comprend :
- un générateur de vapeur destiné à produire de la vapeur pour chauffer ou cuire les aliments ;
- un récipient de cuisson, recevant un panier de cuisson amovible pourvu d'ouvertures traversantes, destinées à permettre le passage de la vapeur, ledit récipient étant obturé réversiblement au niveau de son extrémité supérieure au moyen d'un couvercle amovible.

L'invention se caractérise :
- en ce que le couvercle amovible est muni d'une ouverture traversante, destinée à permettre la mise en communication du générateur de vapeur avec l'intérieur dudit récipient, et notamment du panier de cuisson ;
- en ce que les ouvertures traversantes du panier de cuisson sont ménagées au voisinage de sa base ;
- et, en ce que le récipient est muni d'une ouverture traversante ménagée sensiblement au voisinage de l'extrémité supérieure de sa paroi le définissant.

En d'autres termes, l'invention consiste à ménager un circuit forcé pour le cheminement de la vapeur de telle sorte, compte tenu du positionnement respectif des orifices d'entrée et de sortie de la vapeur dans et hors du récipient, à constituer une sorte de chicane dans laquelle la vapeur va traverser l'intégralité du panier de cuisson, l'orifice d'entrée étant en effet situé au dessus du panier de cuisson. Ainsi, afin de pouvoir s'échapper, la vapeur doit nécessairement traverser le contenu du panier de cuisson avant de remonter le long de la paroi latérale définissant le récipient et ainsi accéder à l'orifice de sortie ménagé à l'extrémité supérieure dudit récipient, ainsi que précisé.

De la sorte, on aboutit à un réchauffement et à une cuisson homogène des aliments, sans nécessiter de phase de mixage lorsqu'en outre cela n'est pas requis.

Compte tenu de l'absence de toute soupape, on comprendra que la cuisson s'effectue sous pression atmosphérique.

Le dispositif conforme à l'invention peut également comporter un couteau de mixage, situé à la base du récipient, et entraîné en rotation au moyen d'un moteur électrique, et ce de manière tout fait traditionnelle.

La manière dont l'invention peut être réalisée et les avantages qui en découlent, ressortiront mieux de l'exemple de réalisation qui suit, donné à titre indicatif et non limitatif à l'appui des figures annexées.

La Figure 1 est une représentation schématique en perspective du récipient conforme à l'invention.

La Figure 2 est une représentation schématique en section dudit récipient.

La Figure 3 est une représentation schématique en section du dispositif conforme à l'invention.

Le dispositif conforme à l'invention comporte fondamentalement un bol ou récipient (1), typiquement réalisé en polysulfone transparent, ce bol présentant une symétrie de révolution, notamment cylindrique. Il comporte une base (12) par le biais de laquelle il vient prendre appui au niveau du dispositif conforme à l'invention. Il comprend également une poignée de préhension (2) ainsi qu'un couvercle amovible (3). Ce couvercle comporte des pattes de fixation (4), destinées à venir coopérer avec des saillies correspondantes (7), ménagées au niveau de l'extrémité supérieure de la paroi latérale définissant ledit bol. De la sorte, on aboutit à une fermeture relativement étanche du couvercle sur le récipient (1).

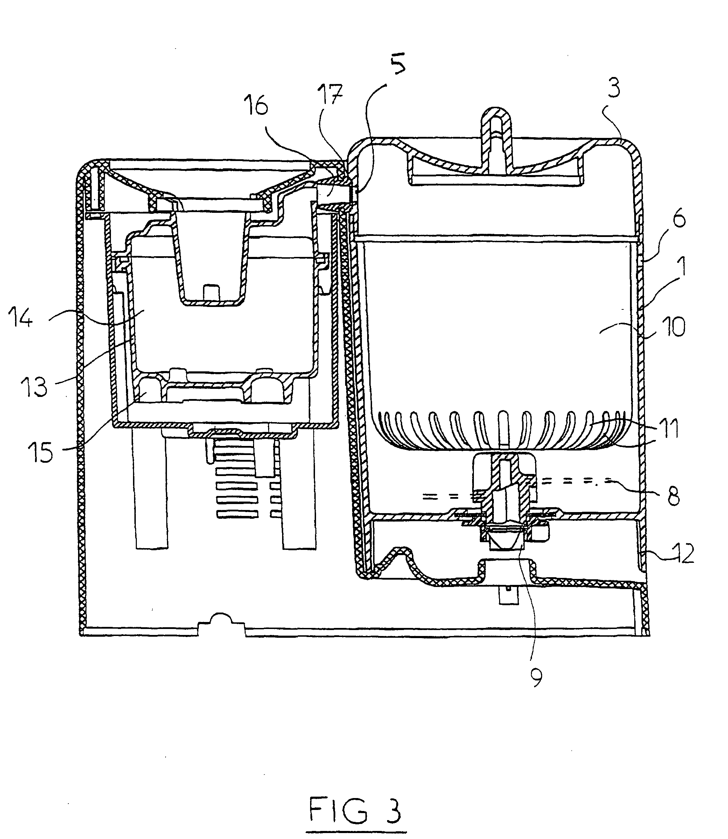

En outre, le couvercle (3) se présente sous la forme d'une portion de cylindre, complémentaire au bol (1), et muni sur la paroi latérale définissant ledit cylindre, d'une ouverture traversante (5) destinée, lorsque le bol est en place au niveau du dispositif conforme à l'invention, à venir se positionner de manière relativement étanche en regard de la sortie d'un générateur de vapeur (13) intégré au sein du dispositif conforme à l'invention, de telle sorte à mettre ainsi en communication l'intérieur du bol (1) avec ledit générateur de vapeur (voir figure 3).

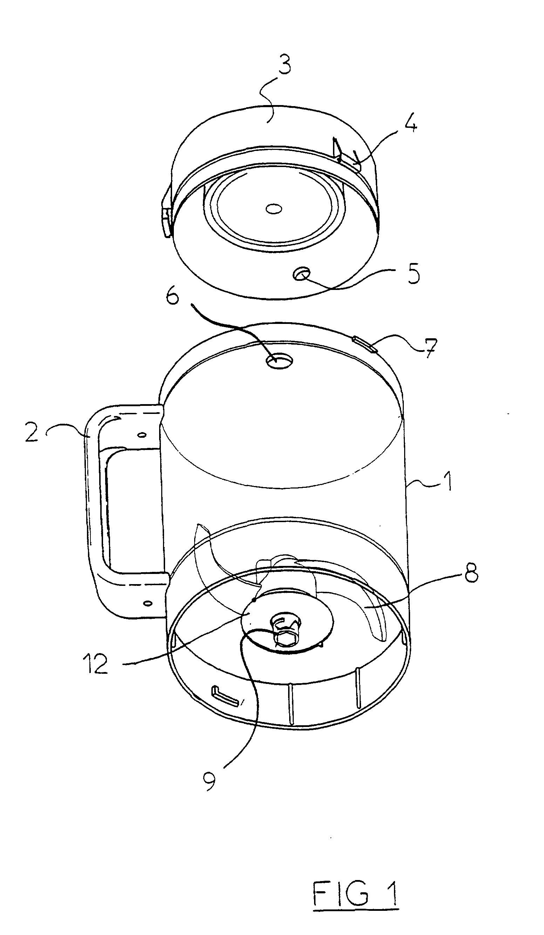

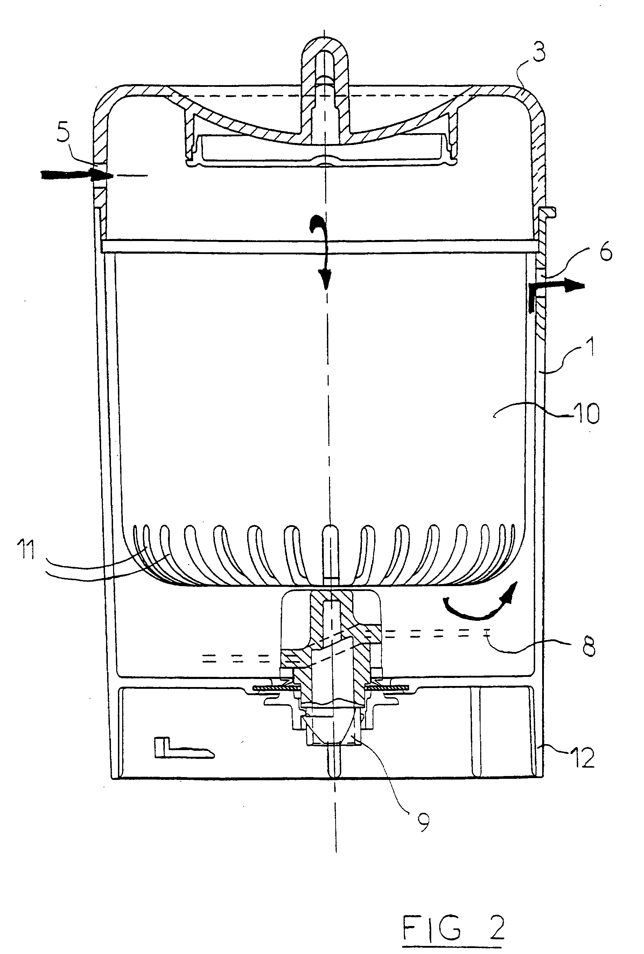

Par ailleurs, le bol (1) comporte au niveau du voisinage de l'extrémité supérieure de la paroi latérale le définissant, une ouverture traversante (6) ainsi que l'on peut bien l'observer sur les figures 1 et 2.

Le bol (1) est destiné à recevoir un panier de cuisson (10), que l'on peut bien observer sur la figure 2, ce dernier venant prendre appui par le biais d'une saillie supérieure périphérique et annulaire (12) sur un épaulement (13) ménagé à cet effet au sein de la paroi latérale définissant le bol.

Selon l'invention, ce panier (10) est pourvu d'un certain nombre d'ouvertures traversantes (11), toutes ménagées au niveau de sa base ainsi que l'on peut bien l'observer sur la Figure 2. Ces ouvertures traversantes (11), sont typiquement constituées d'ouïes s'étendant entre le fond et la base de la paroi latérale définissant ledit panier, régulièrement espacées et réparties, ainsi que des orifices circulaires, ménagés au niveau du fond dudit panier.

On a représenté par un certain nombre de flèches, le trajet suivi par la vapeur, compte tenu du positionnement respectif des différentes ouvertures. Ainsi, la vapeur pénètre à l'intérieur du bol par l'ouverture (5) ménagée au niveau du couvercle amovible (3). L'ouverture supérieure du panier de cuisson (10) débouchant directement sous le couvercle, la vapeur est ensuite acheminée à l'intérieur dudit panier, d'où elle sort par les ouvertures traversantes (11) pour remonter le long de la paroi latérale définissant ledit bol, afin de s'échapper par l'orifice (6).

La vapeur commence donc pas suivre un chemin descendant au sein du panier de cuisson, depuis l'ouverture (5) du couvercle (3), jusqu'aux ouvertures (11), puis un parcours ascendant depuis lesdites ouvertures jusqu'à l'orifice de sortie (6) du bol. Ainsi, le contenu d'un panier de cuisson (10) se trouve au contact directe avec la vapeur, pour ainsi permettre soit son réchauffement, soit sa cuisson. De par le positionnement régulier et régulièrement réparti des orifices traversants (11) ménagés au sein du panier de cuisson, on aboutit de fait à une répartition homogène de la vapeur et partant à une cuisson ou à un réchauffement lui-même homogène, diminuant le cas échéant la durée de cuisson ou de réchauffement.

Selon l'invention, le bol (1) peut également être muni d'un couteau de mixage (8), mû en rotation par l'intermédiaire d'un écrou (9) venant engrener sur un arbre moteur, lui-même activé par un moteur électrique, avantageusement situé sous le générateur de vapeur, et une courroie.

On a représenté sur la figure 3 la mise en place du bol (1) au sein du dispositif conforme à l'invention. Ledit bol est placé au niveau du lieu qui lui est destiné, et l'ouverture (5) ménagée au sein du couvercle (3) est positionnée en regard de la canalisation (16) émanant du générateur de vapeur (13) par simple rotation, cette rotation étant limité en angle, par une butée (non représentée) ménagée au sein dudit couvercle, et coopérant de manière complémentaire avec un moyen intégré dans le châssis du dispositif, de telle sorte qu'en fin de course, ladite ouverture soit correctement positionnée. Par ailleurs, lors de cette opération, le couvercle (3) exerce une certaine pression sur un joint déformable (17), positionné au niveau de la zone de sortie de la canalisation (16), de telle sorte à assurer une certaine étanchéité lors du transfert de la vapeur du générateur de vapeur (13) vers le bol (1).

Ce générateur de vapeur comprend, de manière connue un réceptacle (14), destiné à recevoir l'eau nécessaire à la production de vapeur, la source thermique étant constituée par une résistance électrique torique (15) placée sous ledit réceptacle.

On conçoit tout l'intérêt de l'agencement respectif des orifices d'entrée et de sortie de la vapeur dans l'optique d'une plus grande efficacité de réchauffement et d'une plus grande homogénéité, sans pour autant altérer la simplicité de réalisation et d'utilisation d'un tel dispositif.

## Revendications

1. Dispositif pour assurer le réchauffement et/ou la cuisson d'aliments comprenant :
• un générateur de vapeur (13) destiné à produire de la vapeur pour chauffer ou cuire les aliments ;
• un récipient de cuisson (1), recevant un panier de cuisson amovible (10) pourvu d'ouvertures traversantes (11), destinées à permettre le passage de la vapeur, ledit récipient étant obturé réversiblement au niveau de son extrémité supérieure au moyen d'un couvercle amovible (3) ;
***caractérisé*:**
• **en ce que** le couvercle amovible (3) est muni d'une ouverture traversante (5), destinée à permettre la mise en communication du générateur de vapeur avec l'intérieur dudit récipient (1), et notamment du panier de cuisson (10) ;
• **en ce que** les ouvertures traversantes (11) du panier de cuisson (10) sont ménagées au voisinage de sa base ;
• et, **en ce que** le récipient (1) est muni d'une ouverture traversante (6) ménagée sensiblement au voisinage de l'extrémité supérieure de la paroi le définissant.

2. Dispositif pour assurer le réchauffement et/ou la cuisson d'aliments selon la revendication 1, ***caractérisé* en ce que** les ouvertures traversantes (11) ménagée au niveau de la base du panier de cuisson (10) sont constituées d'ouïes s'étendant entre le fond et la base de la paroi latérale définissant ledit panier, régulièrement espacées et réparties, ainsi que des orifices circulaires, ménagés au niveau du fond dudit panier.

3. Dispositif pour assurer le réchauffement et/ou la cuisson d'aliments selon l'une des revendications 1 et 2, ***caractérisé* en ce que** le récipient (1) comporte également un couteau de mixage (8), situé à la base du récipient, et entraîné en rotation au moyen d'un moteur électrique intégré au sein dudit dispositif.

## Patentansprüche

1. Vorrichtung zum Kochen und/oder Aufwärmen von Nahrungsmitteln, umfassend:
• einen Dampferzeuger (13), der dazu bestimmt ist, Dampf zum Erwärmen oder Kochen der Lebensmittel zu erzeugen;
• einen Kochbehälter (1), der einen herausnehmbaren Kocheinsatz (10) aufnimmt, der mit durchgehenden Öffnungen (11) versehen ist, die dazu bestimmt sind, den Dampf hindurchgehen zu lassen, wobei der Behälter auf Höhe seines oberen Endes mittels eines abnehmbaren Deckels (3) umkehrbar verschlossen ist;
**dadurch gekennzeichnet:**
• **dass** der abnehmbare Deckel (3) mit einer hindurchgehenden Öffnung (5) versehen ist, die dazu bestimmt ist, den Dampferzeuger und insbesondere den Kocheinsatz (10) mit dem Inneren des Behälters (1) in Verbindung zu setzen;
• **dass** die durchgehenden Öffnungen (11) des Kocheinsatzes (10) in unmittelbarer Nähe seiner Basis ausgespart sind;
• **dass** der Behälter (1) mit einer durchgehenden Öffnung (6) versehen ist, die im Wesentlichen in unmittelbarer Nähe des oberen Endes der diesen Behälter definierenden Wandung ausgespart ist.

2. Vorrichtung zum Aufwärmen und/oder Kochen von Lebensmitteln nach Anspruch 1,
**dadurch gekennzeichnet, dass** die auf Höhe der Basis des Kocheinsatzes (10) ausgesparten durchgehenden Öffnungen (11) von Schlitzen, die sich gleichmäßig beabstandet und verteilt zwischen dem Boden und der Basis der den Einsatz definierenden Seitenwandung erstrecken, sowie von kreisförmigen Öffnungen gebildet werden, die im Bodenbereich des Einsatzes ausgespart sind.

3. Vorrichtung zum Aufwärmen und/oder Kochen von Lebensmitteln nach einem der Ansprüche 1 und 2,
**dadurch gekennzeichnet, dass** der Behälter (1) auch ein Mischmesser (8) umfasst, das an der Behälterbasis angeordnet ist und mittels eines in die Vorrichtung eingebauten Elektromotors in Drehung versetzt wird.

## Claims

1. Device for heating and/or cooking food, comprising:
• a steam generator (13) for heating or cooking food;
• a cooking container (1), receiving a removable cooking basket (10) provided with through apertures (11) to allow the steam through, said container being reversibly sealed at its upper end with a removable lid (3);
***characterized*:**
• **in that** the removable lid (3) is provided with a through aperture (5), to allow the steam generator to communicate with the inside of said container (1), and particularly of the cooking basket (10);
• **in that** the through apertures (11) of the cooking basket (10) are arranged in the proximity of its base;
• and **in that** the container (1) is provided with a through aperture (6) arranged substantially near the top end of the wall defining it.

2. Device for heating and/or cooking food according to claim 1, ***characterized* in that** the through apertures (11) arranged in the base of the cooking basket (10) consist of openings extending between the bottom and the base of the side wall defining said basket, uniformly spaced and distributed, and circular holes arranged in the bottom of said basket.

3. Device for heating and/or cooking food according to one of claims 1 and 2, ***characterized* in that** the container (1) also includes a mixing blade (8) located in the base of the container and driven in rotation by means of an electric motor incorporated within said device.
